# EUROPÄISCHE PATENTSCHRIFT

(11) **EP 2 499 396 B1**
(45) Veröffentlichungstag und Bekanntmachung des Hinweises auf die Patenterteilung: **21.05.2014**
(21) Anmeldenummer: 10798480.9
(22) Anmeldetag: 04.11.2010
(51) Int. Cl.: F16H 1/46, F16H 57/02

(54) **MEHRSTUFIGES PLANETENGETRIEBE**
MULTI-STAGE PLANETARY GEAR TRAIN
ENGRENAGE PLANÉTAIRE À PLUSIEURS ÉTAGES

(30) Priorität: 13.11.2009 DE 102009052898
(43) Veröffentlichungstag der Anmeldung: 19.09.2012
(73) Patentinhaber: Johnson Electric Dresden GmbH, 01257 Dresden (DE)
(72) Erfinder: GASSMANN, Jörg, 01237 Dresden (DE); MÜLLER, Thomas, 01309 Dresden (DE); KEIL, Ronny, 01156 Dresden (DE)
(74) Vertreter: Grüneberg, Marcus
(86) Internationale Anmeldenummer: PCT/DE2010/001292
(87) Internationale Veröffentlichungsnummer: WO 2011/057604

(56) Entgegenhaltungen:
- WO-A1-00/11372
- DE-U- 1 919 825
- US-A- 4 825 727
- US-A- 5 366 423

## Beschreibung

Die Erfindung betrifft ein mehrstufiges Planetengetriebe , zumindest bestehend aus mehreren, zwischen den Adapterplatten des Motors und des Getriebekopfs in axialer Richtung hintereinander angeordneten, ringförmigen Segmenten, die jeweils einen aus einem Sonnenrad, mehreren von einem Planetenträger getragenen Planetenrädern und einem Hohlrad mit Innenverzahnung bestehenden Planetensatz aufweisen, wobei jeweils benachbarte ringförmige Segmente miteinander und die jeweils äußeren Segmente mit den jeweiligen Adapterplatten gekoppelt sind.

Ein Planetengetriebe ist eine spezielle Bauform eines kompakt bauenden Zahnrad-Getriebes mit in der Regel koaxial zueinander platzierten Wellen.

Die grundlegende Bauart besteht aus einem Zahnradsatz, der von innen nach außen aus einem Sonnenrad, mehreren von dem Planetenträger getragenen Planetenrädern und einem Hohlrad mit Innenverzahnung besteht.

Ferner wird nicht nur der vorgenannte einfache Planetensatz als Planetengetriebe bezeichnet, sondern auch alle auf dieser Grundbauform beruhenden Kombinationen mehrerer, hintereinander geschalteter Planetensätze. Dadurch lassen sich große Untersetzungen realisieren, wobei sich die Gesamtuntersetzung aus der entsprechenden Stufenzahl und jeder einzelnen Untersetzung ermittelt. Bei dieser Ausführungsform wird das Planetengetriebe durch mehrere axial hintereinander platzierte ringförmige Segmente gebildet, wobei jedes einzelne Segment ein Hohlrad und einen Planetensatz umfasst. Im montierten Zustand ergänzen sich die entsprechenden Hohlräder der einzelnen Segmente zu einem Hohlrad.

Aus dem Stand der Technik ist die DE 41 05 907 A1 vorbekannt, in welcher ein mehrstufiges Planetengetriebe offenbart ist. Das Planetengetriebe besteht aus zwei oder mehr Einbausätzen mit jeweils äußerem Hohlrad, Planetenrädern und Sonnenrad. Kennzeichnend für diese Erfindung ist, dass die Einbausätze mittels die Hohlräder miteinander verbindender Zwischenringe sich zu einem abgestuften Getriebeblock ergänzen und jedes Hohlrad wahlweise mit einem eigenen umlaufenden Außenmantel zur Bildung eines Ringkanals für die Führung eines Temperierungsmediums belegbar ist.

Die DE 197 38 429 A1 beschreit ein Getriebe mit großem Untersetzungsverhältnis ins Langsame, insbesondere für Rollläden, Markisen, Vorhänge, Verschlusselemente und dergleichen. Das Getriebe umfasst eine Antriebswelle und eine Abtriebswelle, zwei zwischengeschaltete Getriebestufen und ein Getriebegehäuse. Kennzeichnend für diese Erfindung ist, dass die beiden Getriebestufen in separaten Gehäusemodulen gelagert und fluchtend aneinander befestigt sind.

Die WO 00/11372 das den nächstliegenden Stand der Technik repräsentiert, offenbart ein mehrstufiges Planetengetriebe mit mehreren in axialer Richtung hintereinander angeordneten, ringförmigen Segmenten, wobei jeweils benachbarte ringförmige Segmente miteinander gekoppelt sind, Die Kopplung dieser Segmente untereinander erfolgt mittels Einrastelemente und komplementäre Aufnahmeelemente. Wesentlich für diese Erfindung ist, dass die Einrastelemente jeweils formschlüssig in Axialrichtung und kraftschlüssig in Drehrichtung in das zugehörige Aufnahmelement eingreifen.

Des Weiteren sind Planetengetriebe mit mehreren axial zueinander platzierten ringförmigen Segmenten aus der DE 15 50 761 A, der DE 19 19 825 U sowie der US 5 366 423 A vorbekannt.

Allen vorgenannten Lösungen ist immanent, dass die einzelnen ringförmigen Segmente unter Verwendung von zusätzlichen Verbindungselementen, üblicherweise Schrauben, miteinander gefügt werden.

Diese Verbindungstechnologie erfordert wegen der erforderlichen Kraftaufnahme relativ große Schrauben, was eine Miniaturisierung des Gesamtaufbaus erschwert. Weiterhin können Schrauben eine präzise Zuordnung der einzelnen Bauteile nicht gewährleisten; es werden weitere Referenzelemente wie beispielsweise Passstifte benötigt. Weiterhin ist eine Befestigung mittels Schrauben in Getrieben, bei welchen die Hohlradsegmente aus Kunststoff bestehen, schwierig, da die Tragfähigkeit der Gewindebohrungen bei kleinen Durchmessern nicht ausreicht und die notwendigen Befestigungskräfte nicht erzeugt werden können.

Die Erfindung besteht nunmehr darin, ein mehrstufiges Planetengetriebe vorzuschlagen, bei dem die einzelnen Ringsegmente exakt zueinander positioniert und dauerhaft miteinander verbunden sind.

Nach der Konzeption der Erfindung besteht das mehrstufige Planetengetriebe zumindest aus mehreren, zwischen den Adapterplatten des Motors und des Getriebekopfs in axialer Richtung hintereinander angeordneten, ringförmigen Segmenten, die jeweils einen aus einem Sonnenrad, mehreren von einem Planetenträger getragenen Planetenrädern und einem Hohlrad mit Innenverzahnung bestehenden Planetensatz aufweisen, wobei jeweils benachbarte ringförmige Segmente miteinander und die jeweils äußeren Segmente mit den jeweiligen Adapterplatten gekoppelt sind. Kennzeichnend für diese Erfindung ist, dass die ringförmigen Segmente und die entsprechenden Adapterplatten im Bereich ihrer aneinandergrenzenden Stirnseiten jeweils einen Koppelbereich ausbilden, und die Segmente jeweils an ihrer einen Stirnseite zumindest ein als distal sich verjüngende oder im Querschnitt abgestufte Hülse, deren Mantelfläche durch einen in Richtung ihrer Längsachse sich erstreckenden Schlitz unterbrochen ist, ausgebildetes Einrastelement und auf Ihrer gegenüberliegenden anderen Stirnseite zumindest ein als Bohrung ausgebildetes komplementäres Aufnahmeelement aufweisen, wobei im Montagezustand das Einrastelement eines Segments formschlüssig in radialer Richtung und kraftschlüssig in axialer Richtung in das Aufnahmeelement eines benachbarten Segments bzw. einer Adapterplatte eingreift.

Das Aufnahmeelement ist dabei bevorzugt als Bohrung und das Einrastelement als komplementäre Hülse ausgebildet.

Bei einer besonders vorteilhaften Weiterbildung der Erfindung ist das Einrastelement als distal sich verjüngende oder im Querschnitt abgestufte Hülse ausgebildet, deren Mantelfläche durch einen in Richtung ihrer Längsachse sich erstreckenden Schlitz unterbrochen ist.

Eine ausreichend hohe Sicherheit gegen gewolltes oder ungewolltes Lösen der einzelnen Segmente wird erfindungsgemäß dadurch erzielt, dass ein Passstift vorgesehen ist, dessen Außenkontur partiell passfähig zur Innenkontur der Hülse ausgebildet ist, welcher nach dem Einführen des Einrastelements in das Aufnahmeelement in das als geschlitzte Hülse ausgebildete Einrastelement eintreibbar ist, wodurch das Einrastelement gegenüber dem Aufnahmeelement referenziert und verspannt wird. Durch das im Querschnitt abgestufte und als Hülse ausgebildete Einrastelement kann der Passstift gut in das Einrastelement eingeführt werden und treibt dann das Einrastelement dieses Segments im Bereich des sich verjüngenden Querschnitts auf, so dass sich der Kopf des Einrastelements erfindungsgemäß im Aufnahmeelement verklemmen kann. Hier bildet sich dann ein Formschluss und/oder Kraftschluss aus. Die Innenkontur ist derart gestaltet, dass einzelne Segmente beim Eintreiben des Passstiftes eine Presspassung und/oder einen Formschluss bilden, die dann zur Deformation und zum Verspannen des Einrastelements gegenüber dem Aufnahmeelements führen.

Aufwändige Versuchsreihen haben ergeben, dass mittels dieses Passstiftes sowohl das Positionieren als auch Verspannen der einzelnen ringförmigen Segmente optimal erreicht werden kann.

Der in der Mantelfläche platzierte Schlitz und ein in der Mantelfläche freigestellter Bereich verhindern, dass beim Verspannen mit dem Passstift keine Deformation der Getriebegeometrie des benachbarten Segments erfolgt.

Durch die Substitution der erfindungsgemäßen Klemm- bzw. Spannverbindung gegen die im Stand der Technik eingesetzten Schraubverbindungen können einerseits die Fertigungskosten des mehrstufigen Planetengetriebes deutlich reduziert und eine deutlich höhere Fertigungstoleranz erzielt werden.

Die Außenfläche des Einrastelements und die Innenfläche des Aufnahmeelements sind jeweils glatt ausgebildet oder mit einer Struktur oder Geometrie versehen, die ein Verhaken beider Koppelpartner ermöglicht oder zumindest begünstigt. Unter Struktur oder Geometrie sind im Sinne der Erfindung die Oberflächenbeschaffenheit und Oberflächengeometrie zu verstehen.

In der Praxis hat sich als besonders vorteilhaft herausgestellt, dass ausreichend hohe Haltekräfte zwischen den miteinander zu koppelnden ringförmigen Segmenten erzielt werden können, wenn jedes ringförmige Segment zum Zwecke einer optimalen Kraftableitung jeweils an seiner ersten Stirnseite mehrere Einrastelemente und auf seiner gegenüberliegenden anderen Stirnseite die gleiche Anzahl komplementäre Aufnahmeelemente aufweist. aufweist. Im Zusammenwirken mit dem Passstift, der sich nach dem Eintreiben innerhalb des hülsenartigen Einrastelements erstreckt, kann das erfindungsgemäße Planetengetriebe einfach und schnell montiert werden.

Die signifikanten Vorteile und Merkmale der Erfindung gegenüber dem Stand der Technik sind im Wesentlichen:
■ einfache, kostengünstige und für Getriebe in Kunststoffkonstruktion geeignete Verbindungstechnik, welche zudem gut automatisiert montierbar ist,
■ konventionelle Schraubverbindungen werden ersetzt durch Klemmverbindungen, die eine weitaus höhere Präzision und extreme Miniaturisierung ermöglichen,
■ Kopplung der einzelnen ringförmigen Segmente erfolgt durch eine Kombination aus Verstiften mittels eines Passstiftes und dem miteinander Verspannen des Einrastelements mit dem Aufnahmeelement durch die Deformation des geschlitzt ausgebildeten hülsenartigen Einrastelements,
■ der in der Mantelfläche platzierte Schlitz und ein zusätzlicher freigestellter Bereich gewährleisten, dass beim Verspannen mit dem Passstift keine Deformation der Getriebegeometrie des benachbarten Segments erfolgt.

Die Ziele und Vorteile dieser Erfindung sind nach sorgfältigem Studium der nachfolgenden ausführlichen Beschreibung der hier bevorzugten, nicht einschränkenden Beispielausgestaltungen der Erfindung mit den zugehörigen Zeichnungen besser zu verstehen und zu bewerten, von denen zeigen:
- Fig. 1:: eine Explosionsdarstellung des Planetengetriebes mit mehreren Segmenten unmittelbar vor dem Montage,
- Fig. 2:: eine Explosionsdarstellung des Planetengetriebes mit mehreren miteinander gekoppelten Segmenten, wobei ein Segment zur besseren Darstellung ausgeblendet wurde,
- Fig. 3:: eine erste Detaildarstellung des Koppelbereichs zweier miteinander gekoppelter Segmente ohne Passstift und
- Fig. 4:: eine zweite Detaildarstellung des Koppelbereichs zweier miteinander gekoppelter Segmente mit Passstift.

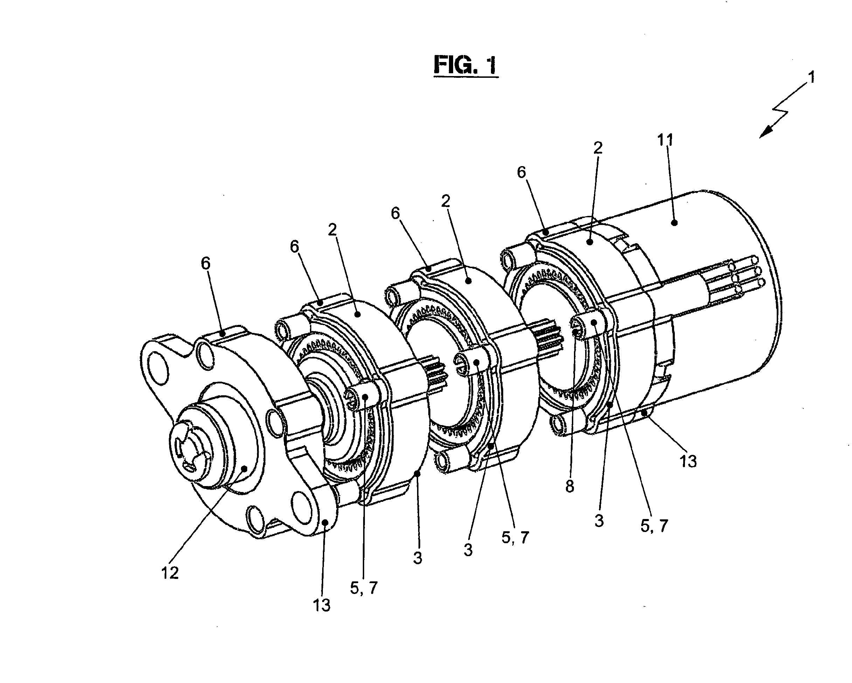

Die Fig. 1 illustriert eine Explosionsdarstellung eines erfindungsgemäßen Planetengetriebes 1 mit mehreren unverbundenen ringförmigen Segmenten 2 unmittelbar vor der Montage. Alle Segmente 2, die jeweils - hier nur angedeutet - einen aus einem Sonnenrad, mehreren von einem Planetenträger getragenen Planetenrädern und einem Hohlrad mit Innenverzahnung bestehenden Planetensatz aufweisen, sind zwischen den Adapterplatten 13 des Motors 11 und des Getriebekopfs 12 mit dem Abtriebslager in axialer Richtung hintereinander platziert. Hinsichtlich der Ausbildung des Getriebekopfes 12 und der zugehörigen Adapterplatte 13 lehrt die Erfindung keine konstruktiven Einschränkungen. Die Adapterplatte 13 und der Getriebekopf können daher einteilig oder getrennt gefertigt bzw. ausgebildet sein.

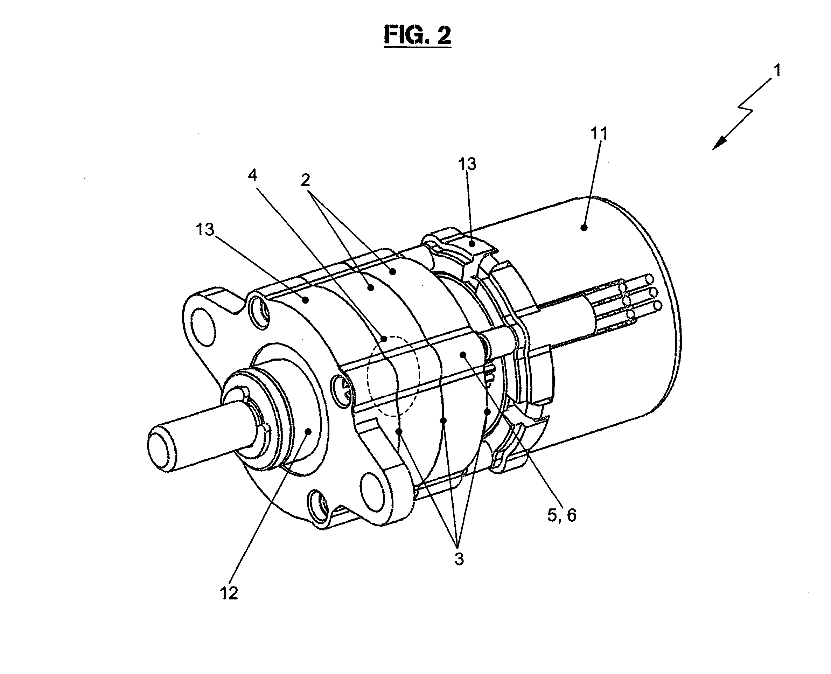

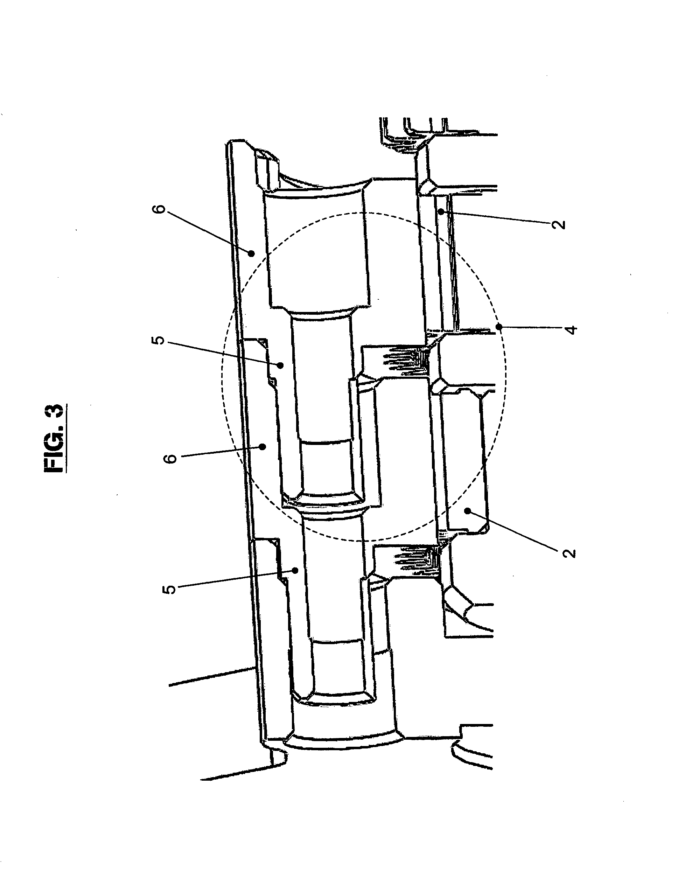

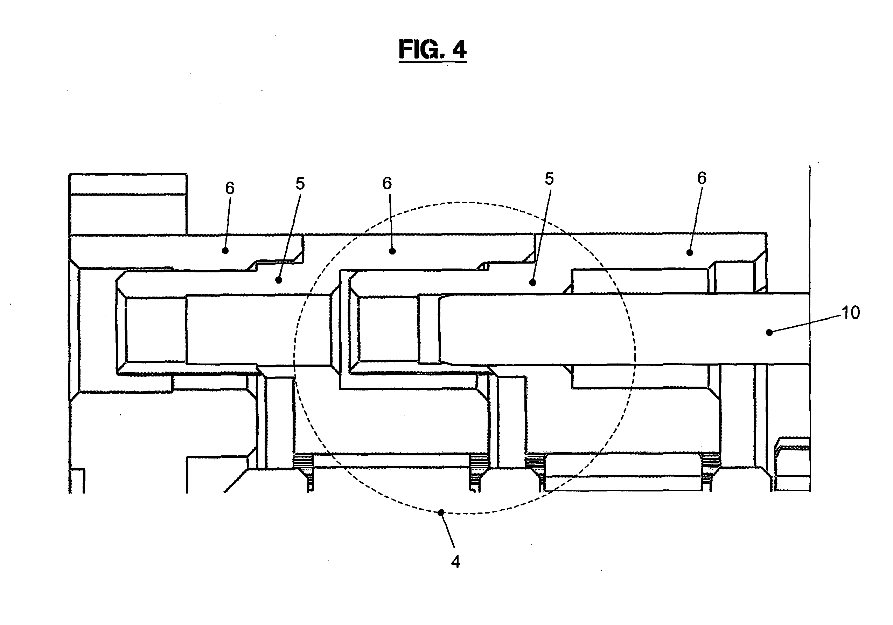

Im Montagezustand sind gemäß Fig. 2 jeweils benachbarte ringförmige Segmente 2 und die jeweils äußeren Segmente 2 mit den jeweiligen Adapterplatten 13 des Motors 11 und des Getriebekopfs 12 zur Ausbildung eines vollständigen mehrstufigen Planetengetriebes 1 miteinander gekoppelt. Aus Gründen einer besseren Veranschaulichung ist ein Segment 2 zur besseren Darstellung ausgeblendet. Die ringförmigen Segmente 2 bilden im Bereich ihrer aneinandergrenzenden Stirnseiten 3 jeweils einen Koppelbereich 4 aus, siehe Figuren 3 und 4. Die Segmente 3 und die Adapterplatten 13 weisen im dargestellten Beispiel jeweils an ihrer einen Stirnseite 3 vier Einrastelemente 5 und auf Ihrer gegenüberliegenden anderen Stirnseite 3 vier komplementäre Aufnahmeelemente 6 auf. Im Montagezustand greifen die Einrastelemente 5 eines Segments 3 formschlüssig in die Aufnahmeelemente 6 eines benachbarten Segments 3 bzw. einer Adapterplatte 13 ein.

Der Fig. 3 ist eine erste Detaildarstellung des Koppelbereichs 4 miteinander gekoppelter Segmente 2 zu entnehmen. Als Koppelbereich 4 der Segmente 2 bzw. der Adapterplatten 13 ist derjenige Bereich zu verstehen, in welchem die sich unmittelbar gegenüberliegenden Stirnseiten 3 zweier benachbarter Segmente 2 bzw. der Adapterplatte 13 einander kontaktieren. Wie ersichtlich, zeigt das linke Segment 3 ein als Bohrung ausgebildetes Aufnahmeelement 6 und das rechte Segment 2 ein komplementäres hülsenartiges Einrastelement 5. Das Einrastelement 5 ist in Richtung seiner Längsachse im Querschnitt abgestuft, wobei sich im dargestellten Beispiel Zonen mit unterschiedlichem Querschnitt ausbilden.

Die Fig. 4 zeigt eine zweite Detaildarstellung des Koppelbereichs 4 zweier miteinander gekoppelter Segmente 2. Die Verbindung bzw. Kopplung zweier benachbarter Segmente 2 bzw. Adapterplatte 13 erfolgt mittels der Einrastelemente 5, der Aufnahmeelemente 6 im Zusammenwirken mit dem Passstift 10. Die Außenkontur des Passstiftes 10 ist erfindungsgemäß partiell passfähig zur Innenkontur des Einrastelements 5 ausgebildet, welcher nach dem Einführen des Einrastelements 5 in das Aufnahmeelement 6 in das als geschlitzte Hülse, siehe Fig. 1, ausgebildete Einrastelement 5 eingetrieben wird, wodurch das Einrastelement 5 gegenüber dem Aufnahmeelement 6 referenziert und verspannt wird. Der in der Mantelfläche 7 platzierte Schlitz 8 des Einrastelements, siehe Fig. 1, ist keilartig mit in Richtung der Innenfläche des Einrastelements 5 sich erweiternden Querschnitt ausgebildet, wodurch sich Mantelflächenflanken 9 ausbilden. Diese Mantelflächenflanken 9 bzw. dieser freigestellte Bereich verhindert die Deformation der Getriebegeometrie des sich daran anschließenden Segments 2 beim Verspannen mit dem Passstift 10.

### LISTE DER BEZUGSZEICHEN

- 1: Planetengetriebe
- 2: Segment
- 3: Stirnseite
- 4: Koppelbereich
- 5: Einrastelement
- 6: Aufnahmeelement
- 7: Mantelfläche
- 8: Schlitz
- 9: Mantelflächenflanke
- 10: Passstift
- 11: Motor
- 12: Getriebekopf
- 13: Adapterplatte

## Patentansprüche

1. Mehrstufiges Planetengetriebe (1), zumindest bestehend aus mehreren, zwischen den Adapterplatten (13) des Motors (11) und des Getriebekopfs (12) in axialer Richtung hintereinander angeordneten, ringförmigen Segmenten (2), die jeweils einen aus einem Sonnenrad, mehreren von einem Planetenträger getragenen Planetenrädern und einem Hohlrad mit Innenverzahnung bestehenden Planetensatz aufweisen, wobei jeweils benachbarte ringförmige Segmente (2) miteinander und die jeweils äußeren Segmente (2) mit den jeweiligen Adapterplatten (13) gekoppelt sind, **dadurch gekennzeichnet, dass** die ringförmigen Segmente (2) und die entsprechenden Adapterplatten (13) im Bereich ihrer aneinandergrenzenden Stirnseiten (3) jeweils einen Koppelbereich (4) ausbilden, und die Segmente (2) jeweils an ihrer einen Stirnseite (3) zumindest ein als distal sich verjüngende oder im Querschnitt abgestufte Hülse, deren Mantelfläche (7) durch einen in Richtung ihrer Längsachse sich erstreckenden Schlitz (8) unterbrochen ist, ausgebildetes Einrastelement (5) und auf Ihrer gegenüberliegenden anderen Stirnseite (3) zumindest ein als Bohrung ausgebildetes komplementäres Aufnahmeelement (6) aufweisen, wobei im Montagezustand das Einrastelement (5) eines Segments (2) formschlüssig in radialer Richtung und kraftschlüssig in axialer Richtung in das Aufnahmeelement (6) eines benachbarten Segments (2) bzw. einer Adapterplatte (13) eingreift.

2. Mehrstufiges Planetengetriebe (1) nach Anspruch 1, **dadurch gekennzeichnet, dass** ein Passstift (10) vorgesehen ist, dessen Außenkontur partiell passfähig zur Innenkontur der Hülse ausgebildet ist, welcher nach dem Einführen des Einrastelements (5) in das Aufnahmeelement (6) in das als geschlitzte Hülse ausgebildete Einrastelement (5) eintreibbar ist, wodurch das Einrastelement (5) gegenüber dem Aufnahmeelement (6) referenziert und verspannt wird.

3. Mehrstufiges Planetengetriebe (1) nach Anspruch 2, **dadurch gekennzeichnet, dass** sich durch das im Querschnitt abgestuft ausgebildete hülsenartige Einrastelement (5) zur Aufnahme des Passstiftes (10) Zonen unterschiedlichen Passungscharakters, insbesondere Presspassungszonen, ausbilden.

4. Mehrstufiges Planetengetriebe (1) nach einem der Ansprüche 1 bis 3, **dadurch gekennzeichnet, dass** die Außenfläche des Einrastelements (5) und die Innenfläche des Aufnahmeelements (6) jeweils glatt ausgebildet oder mit einer Struktur oder Geometrie versehen ist, die ein Verhaken beider Koppelpartner ermöglicht oder zumindest begünstigt.

5. Mehrstufiges Planetengetriebe (1) nach einem der Ansprüche 1 bis 4, **dadurch gekennzeichnet, dass** jedes ringförmige Segment (2) zum Zwecke einer optimalen Kraftableitung jeweils an seiner einen Stirnseite (3) mehrere Einrastelemente (5) und auf seiner gegenüberliegenden anderen Stirnseite (3) die gleiche Anzahl komplementäre Aufnahmeelemente (6) aufweist.

## Claims

1. Multi-stage planetary gear train (1), at least comprising several annular segments (2) arranged one behind the other in the axial direction between the adapter plates (13) of the motor (11) and of the gear head (12), each annular segment having a planetary gear set comprising a sun gear, several planet gears carried by a planet carrier, and a ring gear having inner teeth, wherein adjacent annular segments (2) are coupled to each other and the outer segments (2) are coupled to the respective adapter plates (13), **characterized by** that the annular segments (2) and the corresponding adapter plates (13) in the region of the adjacent end faces (3) thereof form a coupling area (4) each, and the segments (2) each comprise at least one engaging element (5) on one end face (3) thereof designed as a sleeve that is distally tapered or stepped in cross-section, with the circumferential surface (7) of the sleeve interrupted by a slit (8) extending in the direction of the longitudinal axis of the circumferential surface (7) and at least one complementary receiving element (6) on the opposite end face (3) thereof established as a hole, wherein the engaging element (5) of a segment (2) engages with the receiving element (6) of an adjacent segment (2) or of an adapter plate (13) in a form-fit manner in the radial direction and in a force-closed manner in the axial direction in the assembled state.

2. Multi-stage planetary gear train (1) to claim 1 **characterized by that** an alignment pin (10) is provided with the outer contour thereof established partially fitting to the inner contour of the sleeve, the alignment pin (10), after insertion of the engaging element (5) into the receiving element (6), being drivable into the engaging element (5) that is designed as slitted sleeve so that the engaging element (5) is referenced and tensioned against the receiving element (6).

3. Multi-stage planetary gear train (1) to claim 2 **characterized by that** due to the sleeve-like engaging element (5) established stepped in its cross-section, zones of different fit character, particularly press fit zones, form to receive the alignment pin (10).

4. Multi-stage planetary gear train (1) to any of the claims 1 to 3 **characterized by that** the outer surface of the engaging element (5) and the inner surface of the receiving element (6) each are established smooth or provided with a structure or geometry enabling or at least promoting both coupling partners hooking together.

5. Multi-stage planetary gear train (1) to any of the claims 1 to 4 **characterized by that** for optimum force dissipation each annular segment (3) is provided with several engaging elements (5) on one of its faces (3) and with the same number of complementary receiving elements (6) on its opposite other face (3).

## Revendications

1. Engrenage planétaire à plusieurs étages (1) consistant en au moins plusieurs segments (2) annulaires disposés axialement en tandem entre les plaques adaptatrices (13) du moteur (11) et de la tête de l'engrenage (12) et chacun ayant un train planétaire consistant en un solaire, plusieurs satellites porté par un porte-satellites et une couronne à denture intérieure, des segments (2) annulaires adjacents étant couplés l'un à l'autre et chaque segment (2) extérieur étant couplé à la plaque adaptatrice (13) correspondante, **caractérisé en ce que** les segments (2) annulaires et les plaques adaptatrices (13) correspondantes forment une zone de couplage (4) dans la zone de leurs faces (3) adjacentes l'une à l'autre et que les segments (2) disposent chacun à sa face un élément d'encliquetage (5) en forme de douille se rétrécissant distalement ou à sections étagées dont la surface latérale (7) est interrompue par une fente (8) s'étendant dans le sens de l'axe longitudinal et, à la face (3) opposée, d'un élément récepteur (6) complémentaire, l'élément d'encliquetage (5) d'un segment (2) s'engageant dans l'élément récepteur (6) d'un segment (2) adjacent ou d'une plaque adaptatrice (13) à engagement positif dans le sens radial et par adhérence dans le sens axial.

2. Engrenage planétaire à plusieurs étages (1) d'après la revendication 1, **caractérisé en ce qu**'un goujon d'assemblage (10) est prévu, dont le contour externe est partiellement adapté au contour interne de la douille et qui, après l'engagement de l'élément d'encliquetage (5) dans l'élément récepteur (6) est insérable dans l'élément d'encliquetage (5) en forme de douille fendue par quoi l'élément d'encliquetage (5) est référencé et serré par rapport l'élément récepteur (6).

3. Engrenage planétaire à plusieurs étages (1) d'après la revendication 2, **caractérisé en ce que** des zones de types d'ajustement différents, notamment des zones d'ajustage serré se forment par l'élément d'encliquetage (5) en forme de douille à sections étagées.

4. Engrenage planétaire à plusieurs étages (1) d'après une des revendications 1 à 3, **caractérisé en ce que** la face externe de l'élément d'encliquetage (5) et la face interne de l'élément récepteur (6) sont lisses toutes les deux ou sont pourvues d'une structure ou d'une géométrie permettant ou au moins favorisant un accrochage l'un à l'autre des deux éléments de couplage.

5. Engrenage planétaire à plusieurs étages (1) d'après une des revendications 1 à 4, **caractérisé en ce que** chaque segment (2) annulaire dispose de plusieurs éléments d'encliquetage (5) à une de ses faces et du même nombre d'éléments récepteurs (6) complémentaires aux fins d'une dérivation optimale de la force.
